# EUROPÄISCHE PATENTSCHRIFT

(11) **EP 3 228 876 B1**
(45) Veröffentlichungstag und Bekanntmachung des Hinweises auf die Patenterteilung: **08.04.2020**
(21) Anmeldenummer: 17000527.6
(22) Anmeldetag: 31.03.2017
(51) Int. Cl.: F15B 21/00, F16D 25/08, F16D 48/02, F15B 1/10

(54) **VORRICHTUNG ZUR REDUKTION VON VIBRATIONEN IN EINEM HYDRAULISCHEN BETÄTIGUNGSSYSTEM, INSBESONDERE EINER HYDRAULISCHEN KUPPLUNGSBETÄTIGUNG FÜR KRAFTFAHRZEUGE**
DEVICE FOR REDUCING VIBRATIONS IN A HYDRAULIC ACTUATION SYSTEM, IN PARTICULAR OF A HYDRAULIC CLUTCH CONTROL FOR A MOTOR VEHICLE
DISPOSITIF DE RÉDUCTION DE VIBRATIONS DANS UN SYSTÈME D'ACTIONNEMENT HYDRAULIQUE, EN PARTICULIER D'UN ACTIONNEMENT D'EMBRAYAGE HYDRAULIQUE POUR VÉHICULES AUTOMOBILES

(30) Priorität: 31.03.2016 DE 102016003717
(43) Veröffentlichungstag der Anmeldung: 11.10.2017
(73) Patentinhaber: FTE automotive GmbH, 96106 Ebern (DE)
(72) Erfinder: Marks, Paul, D-96106 Ebern (DE); Weibelzahl, Wilfried, D-96271 Grub a. Forst (DE)
(74) Vertreter: Oppermann, Mark

(56) Entgegenhaltungen:
- WO-A1-2010/084008
- US-A1- 2009 260 701

## Beschreibung

### TECHNISCHES GEBIET

Die vorliegende Erfindung bezieht sich auf eine Vorrichtung zur Reduktion von Vibrationen in einem hydraulischen Betätigungssystem gemäß dem Oberbegriff des Patentanspruchs 1. Insbesondere bezieht sich die Erfindung auf eine Vorrichtung zur Reduktion von Vibrationen bzw. Druckpulsationen in einer hydraulischen Kupplungsbetätigung für Kraftfahrzeuge, wie sie massenweise in der Automobilindustrie zum Einsatz kommen.

### STAND DER TECHNIK

Eine herkömmliche hydraulische Kupplungsbetätigung für Kraftfahrzeuge weist einen an einem Pedalbock des Kraftfahrzeugs montierten Geberzylinder und einen getriebenah im Kraftfahrzeug befestigten, konventionell oder in bezüglich einer Getriebewelle koaxialer Anordnung als Zentralausrücker ausgebildeten Nehmerzylinder auf, wobei der Geberzylinder und der Nehmerzylinder über eine Hydraulikleitung hydraulisch miteinander verbunden sind. Der Kolben des hydraulisch an einen Ausgleichsbehälter angeschlossenen Geberzylinders ist über eine Kolbenstange mit einem Kupplungspedal wirkverbunden, so dass der Geberzylinder durch Niedertreten des Kupplungspedals betätigt werden kann, was eine Verschiebung des Kolbens im Geberzylinder bewirkt. Hierbei wird in Richtung des Nehmerzylinders eine Flüssigkeitssäule durch die Hydraulikleitung hindurchgeschoben, die den Nehmerzylinder hydraulisch beaufschlagt. Der Nehmerzylinder, genauer dessen Kolben steht vermittels einer Kolbenstange über einen Ausrückhebel und ein Ausrücklager - oder, im Falle des Zentralausrückers mit Ringkolben und Schiebehülse, direkt über das auf der Schiebehülse sitzende Ausrücklager - mit einem Ausrückmechanismus einer Reibungskupplung in Wirkverbindung.

Wird der Nehmerzylinder zum Ausrücken der Reibungskupplung hydraulisch beaufschlagt, so wird vermittels des kolbenbetätigten Ausrückmechanismus eine Kupplungsdruckplatte von einer auf einer Getriebewelle sitzenden Kupplungsmitnehmerscheibe der Reibungskupplung getrennt, die mit einer von der Kurbelwelle des Verbrennungsmotors getragenen Schwungscheibe zusammenwirkt. Im Ergebnis kommt es zu einer Trennung des Verbrennungsmotors vom Getriebe des Kraftfahrzeugs. Wird das Kupplungspedal hingegen entlastet, um die Reibungskupplung wieder einzurücken, wird der Nehmerzylinder, genauer dessen Kolben infolge u.a. der Federkräfte der Reibungskupplung wieder in seine Grund- bzw. Ausgangsstellung zurückgebracht, wobei die oben erwähnte Flüssigkeitssäule durch die Hydraulikleitung hindurch wieder zurück in Richtung des Geberzylinders geschoben wird.

Bei einer solchen hydraulischen Kupplungsbetätigung - die als quasi-stationäres hydraulisches Kraftübertragungssystem zu betrachten ist, bei dem keine kontinuierliche Strömung der Hydraulikflüssigkeit vorliegt - werden Schwingungen vom Verbrennungsmotor, insbesondere dessen Kurbelwelle über die Bauteile der Reibungskupplung, das Ausrücklager, ggf. den Ausrückhebel und den Nehmerzylinder in die sich in der Hydraulikleitung befindende Flüssigkeitssäule zwischen Nehmerzylinder und Geberzylinder übertragen, in der sie sich als Druckpulsationen fortpflanzen.

Es wurde bereits als nachteilig empfunden, dass diese Druckpulsationen vom Fahrer am Kupplungspedal als Vibrationen insbesondere dann zu spüren sind, wenn der Fuß auf dem Kupplungspedal in typisch städtischer Fahrweise abgestützt wird - sogenanntes "Anlegekribbeln" - oder das durchgetretene Kupplungspedal z.B. während eines Stopps vor einer Ampel gehalten wird.

So fehlt es denn im Stand der Technik nicht an Vorschlägen, wie dieser Problematik zu begegnen ist (z.B. DE 36 31 507 C2, DE 40 03 521 C2, DE 195 40 753 C1, DE 101 12 674 C1 oder DE 103 51 907 A1). Diesen Vorschlägen ist gemein, dass in die oder parallel zur Hydraulikleitung zwischen Geberzylinder und Nehmerzylinder eine separate, die Flüssigkeitssäule zwischen Geberzylinder und Nehmerzylinder nicht unterbrechende Baugruppe zur Schwingungsdämpfung eingesetzt bzw. angeordnet wird, welche die Druckpulsationen im Allgemeinen auch zufriedenstellend zu dämpfen vermag. Allerdings nehmen die vorbekannten Lösungen z.T. relativ viel Bauraum in Anspruch, der im Motorraum des Kraftfahrzeugs nicht immer in ausreichendem Maße zur Verfügung steht, und/oder bedingen einen verhältnismäßig komplexen und dementsprechend teuren Aufbau der Vorrichtung, wie er für die Massenfertigung unerwünscht ist.

Vor diesem Hintergrund wurde in der den Oberbegriff des Patentanspruchs 1 bildenden Druckschrift WO 2010/084008 A1 (Fig. 17 und 18) insbesondere eine Vorrichtung zur Reduzierung von Druckpulsationen vorgeschlagen, die ein Gehäuse hat, in dem ein Druckraum ausgebildet ist, der über zwei Anschlüsse mit einem hydraulischen Betätigungssystem fluidverbunden werden kann. Bei diesem Stand der Technik ist - als eine der vorgeschlagenen Dämpfungsmaßnahmen - der Druckraum von einer gummielastischen Membran begrenzt, die eine dem Druckraum zugewandte, druckbeaufschlagbare Fläche und eine vom Druckraum abgewandte Fläche aufweist. Die vom Druckraum abgewandte Fläche ist hierbei mit einer Profilierung versehen, über die sich die Membran bei Druckbeaufschlagung an einem festen Wandabschnitt des Gehäuses abstützen kann und welche mehrere Stegabschnitte mit jeweils mehreren Stegen aufweist. Dabei besitzt jeder Steg einen vom Wandabschnitt des Gehäuses fernen Stegfuß, ein dem Wandabschnitt nahes Stegende und einen definierten Stegquerschnitt. Diese Profilierung soll unter Druckbeaufschlagung der Membran durch Verpressung gegen den festen Wandabschnitt des Gehäuses - abhängig von dem statisch anstehenden Druck und der Amplitude der Druckpulsation - eine definiert beschränkte Volumenaufnahme im Druckraum gestatten, welche wiederum die Dämpfungseigenschaften der Vorrichtung beeinflusst.

Generell kann hierzu gesagt werden, dass, je höher die mögliche Volumenaufnahme durch das volumenaufnehmende Bauteil - hier die gummielastische Membran mit ihrer Profilierung, d.h. ihrer Membrankontur - ist, desto wirksamer wird eine Druckpulsation in der Flüssigkeitssäule gedämpft. Andererseits ist jedoch die Gesamtvolumenaufnahme des hydraulischen Betätigungssystems möglichst gering zu halten, um das Betätigungssystem nicht zu "weich" zu machen und mit einer zu großen Systemweichheit einhergehende Pedalwegverluste, ein "schwammiges" Betätigungsgefühl, etc. zu vermeiden.

Insofern ist bei den vorbekannten Vorrichtungen zur Reduzierung von Druckpulsationen unter Zuhilfenahme einer profilierten, gummielastischen Membran regelmäßig eine Membrankontur anzutreffen, die zu einer degressiven Volumen-Druck-Kennlinie führt, d.h. bei im Verhältnis niedrigen Drücken (z.B. bis 5 bar) erfolgt eine relative große Volumenaufnahme unter Verpressung der Profilierung mit der festen Gehäusewand, während bei höheren Drücken (beispielsweise 20 bis 30 bar) und stärkerer Verpressung der Profilierung mit der Gehäusewand deutlich weniger Volumen aufgenommen werden kann.

Vor diesem Hintergrund leuchtet ein, dass die vorbekannte Lösung das vorbeschriebene "Anlegekribbeln" bei eher niedrigen Drücken in der Flüssigkeitssäule infolge relativ großer Volumenaufnahmefähigkeit durch die profilierte Membran noch wirksam zu reduzieren vermag, mit zunehmenden Drücken in der Flüssigkeitssäule aufgrund deutlich abnehmender Volumenaufnahmefähigkeit ihre Dämpfungswirkung durch die profilierte Membran indes immer mehr verliert. Es gilt jedoch auch, die Übertragung von Druckpulsationen bei durchgetretenem Kupplungspedal, d.h. im Verhältnis hohen Drücken in der Flüssigkeitssäule wirksam zu reduzieren, weshalb im Stand der Technik weitere Dämpfungsmaßnahmen (Leitungszusatzstrecke mit einem schraubengewindeartig verlaufenden Wendelabschnitt, Querschnittsverjüngung mit Drosselwirkung, etc.) vorgesehen wurden, was allerdings einen gewissen Mehraufwand bedingte.

Bedenkt man ferner, dass fahrzeugindividuell, d.h. abhängig vom jeweiligen hydraulischen Betätigungssystem und dessen Schwingungsverhalten unterschiedliche Druckbereiche mit höchsten Amplituden der Druckpulsation in der Flüssigkeitssäule bestehen, wäre eine Vorrichtung zur Reduzierung von Druckpulsationen wünschenswert, deren Volumen-Druck-Kennlinie in schwingungskritischen Druckbereichen steiler (höhere Volumenaufnahmefähigkeit) gestaltet werden könnte als in den restlichen Druckbereichen, wo ein flacherer Kennlinienverlauf (geringere Volumenaufnahmefähigkeit) ein "steiferes" Systemverhalten versprechen würde.

Die Druckschrift US 2009/0260701 A1 offenbart schließlich einen weiteren Pulsationsdämpfer, der in einem strömungstechnischen System eines Messgeräts zur Zellvermessung eingesetzt werden soll, bei der - anders als bei den vorbeschriebenen, quasi-stationären hydraulischen Kraftübertragungssystemen - ein stetiger, pulsfreier Flüssigkeitsstrom vorliegt und benötigt wird.

### AUFGABENSTELLUNG

Der Erfindung liegt ausgehend von dem oben geschilderten Stand der Technik die Aufgabe zugrunde, eine Vorrichtung zur Reduktion von Vibrationen in einem hydraulischen Betätigungssystem, insbesondere einer hydraulischen Kupplungsbetätigung für Kraftfahrzeuge zu schaffen, die möglichst einfach, kostengünstig und kompakt ausgebildet sowie im Hinblick auf ihre durch eine profilierte, gummielastische Membran bewirkten Schwingungsdämpfungseigenschaften optimiert ist.

### DARSTELLUNG DER ERFINDUNG

Diese Aufgabe wird durch die im Patentanspruch 1 angegebenen Merkmale gelöst. Vorteilhafte bzw. zweckmäßige Weiterbildungen der Erfindung sind Gegenstand der Patentansprüche 2 bis 15.

Bei einer Vorrichtung zur Reduktion von Vibrationen in einem hydraulischen Betätigungssystem, insbesondere einer hydraulischen Kupplungsbetätigung für Kraftfahrzeuge, die ein Gehäuse umfasst, in dem ein Druckraum ausgebildet ist, der über wenigstens einen Anschluss mit dem hydraulischen Betätigungssystem fluidverbindbar und von einer gummielastischen Membran begrenzt ist, welche eine dem Druckraum zugewandte, druckbeaufschlagbare Fläche und eine vom Druckraum abgewandte Fläche aufweist, wobei Letztere mit einer Profilierung versehen ist, über die sich die Membran bei Druckbeaufschlagung an einem festen Wandabschnitt des Gehäuses abzustützen vermag und welche wenigstens einen Stegabschnitt mit mindestens einem Steg aufweist, der einen vom Wandabschnitt fernen Stegfuß, ein dem Wandabschnitt nahes Stegende und einen definierten Stegquerschnitt besitzt; ist erfindungsgemäß der oder jeder Steg bezüglich einer gedachten Ebene, die normal zur druckbeaufschlagbaren Fläche der Membran durch den Stegfuß und senkrecht zum Stegquerschnitt verläuft, unsymmetrisch ausgebildet ist, so dass der oder jeder Steg bei vorbestimmter Druckbeaufschlagung der Membran unter Anlage des Stegendes am Wandabschnitt in vorbestimmter Richtung unbehindert knickt.

Mit dem Begriff "Knicken" - unter dem man in der technischen Mechanik streng genommen den Verlust der Stabilität bis hin zum schlagartigen und gewaltsamen Versagen von geraden bzw. leicht gekrümmten Stäben oder Balken unter der Wirkung von Druckkräften, deren Wirkungslinie in der Stabachse liegt, und/oder von Biegemomenten versteht - soll in diesem Zusammenhang zum Ausdruck gebracht werden, dass der zwischen seinem membranseitigen Stegfuß und seinem membranfernen, am Wandabschnitt anliegenden Stegende eingespannte Steg infolge seines unsymmetrischen Querschnitts bei einer Druckbeaufschlagung der Membran von definierter Höhe schlagartig bzw. plötzlich zu einer vorbestimmten Seite hin ausweicht bzw. elastisch wegfedert. Der Begriff des "Knickens" soll also nicht im Hinblick auf die Geometrie der Stege und die Mechanik des Vorgangs beschränkend verstanden werden im Sinne von "stab- oder balkenförmig" bzw. "Knickung des Euler-Stabs in der Elastostatik" od.dgl. Je nach Geometrie der Stege kann es sich mechanisch gesehen auch um ein "Beulen" - unter dem man in der technischen Mechanik insbesondere das Ausweichen von Platten, deren Belastung im Wesentlichen einen Scheibenspannungszustand darstellt, aus einer Ebene oder das Ausweichen von Schalen, deren Belastung im Wesentlichen einen Membranspannungszustand darstellt, versteht - handeln. Ist die gummielastische Membran beispielsweise rohrförmig, also rotationssymmetrisch ausgebildet und am Außenumfang zur Bildung des Stegs (bzw. der Stege) mit umlaufenden Rillen versehen, so verformt sich der (jeweilige) Steg unter dem Einfluss der Drucklast am realen Bauteil eher wie eine Platte als wie ein "Knickstab". Wesentlich ist, dass der (jeweilige) Steg, der unter Druckbeaufschlagung der Membran stirnseitig gegen den festen Wandabschnitt des Gehäuses gepresst ist, bei Erreichen eines vorbestimmten Drucks jäh reversibel zur Seite "wegbricht", so dass die gummielastische Membran schlagartig eine größere Volumenaufnahme ermöglicht, wodurch wiederum eine den Druckraum durchlaufende Druckpulsation wirksamer gedämpft wird.

Mit anderen Worten gesagt, ein Grundgedanke der Erfindung besteht darin, die Eigenschaft des Knickens bzw. Beulens gezielt in die Struktur, genauer die wenigstens einen Stegabschnitt mit mindestens einem Steg aufweisende Profilierung der gummielastischen Membran zu implementieren. Hierdurch wird erreicht, dass die Volumenaufnahme durch die profilierte, gummielastische Membran über dem Druck aufgetragen zunächst weitgehend linear verläuft, bevor die Stegstruktur der Profilierung bei einem vorbestimmten Druck unbehindert knickt, so dass die Volumen-Druck-Kennlinie ab diesem Druck sprungartig wesentlich steiler verläuft. Erst wenn alle Strukturelemente der Stegstruktur geknickt sind, ergibt sich wieder ein flacherer, degressiver Verlauf der Volumen-Druck-Kennlinie. Damit besteht in den flachen Bereichen der Volumen-Druck-Kennlinie der Vorrichtung bei bestimmten Drücken ein eher "steifes" Systemverhalten, was in einem Einsatz der Vorrichtung in einer hydraulischen Kupplungsbetätigung für Kraftfahrzeuge nur geringe Pedalwegverluste und ein gutes, direktes Betätigungsgefühl bedeutet, während in dem/ den steilen "Knick"-Bereich(en) der Volumen-Druck-Kennlinie ein eher "weiches", Druckpulsationen gut bedämpfendes Systemverhalten vorliegt.

Dabei kommt der unsymmetrischen Ausbildung des (jeweiligen) Stegs bezüglich der gedachten, normal zur druckbeaufschlagbaren Fläche der Membran durch den Stegfuß und senkrecht zum Stegquerschnitt verlaufenden Ebene eine besondere Bedeutung zu. Hierdurch wird nämlich bewirkt, dass der (jeweilige) eingespannte und druckbelastete Steg die Drucklast zu einer Seite hin weniger abzustützen vermag als zur gegenüberliegenden Seite hin, so dass der (jeweilige) Steg bei Erreichen der kritischen Drucklast immer in dieselbe (Vorzugs)Richtung knickt, was eine gleichbleibende Volumenaufnahme zur Folge hat, und dieses stets bei ein und derselben kritischen Drucklast. Anders als bei einer symmetrischen Ausbildung eines knickfähigen Stegs, bei der sich unter einer unbestimmten kritischen Drucklast mehr oder weniger zufällig ein "Wegbrechen" des Stegs in die eine oder die andere Richtung ergeben würde, führt die beanspruchte, unsymmetrische Ausgestaltung des (jeweiligen) Stegs also zu stets gut reproduzierbaren Ergebnissen, sowohl was die Höhe des Drucks betrifft, bei dem ein Knicken erfolgt, als auch was die Größe der sich dann ergebenden Volumenaufnahme durch die Membran angeht.

Es ist ersichtlich, dass mit der erfindungsgemäß ausgebildeten Membran eine besonders dämpfungswirksame, hohe Volumenaufnahme nicht nur bei niedrigen Drücken erzielbar ist, wie im oben geschilderten Stand der Technik, sondern quasi punktuell in beliebigen, schwingungskritischen Druckbereichen, und zwar durch entsprechende Ausgestaltung der (bzw. des) Stegabschnitte(s), ohne dass dies ein Mehr an Bauraum beanspruchen würde, hierzu aufwändige und demgemäß kostenintensive weitere Maßnahmen vorzusehen wären oder eine bessere Dämpfungswirkung mit einem insgesamt weicheren Systemverhalten erkauft werden müsste. Das erfindungsgemäße Vorrichtungskonzept ist damit prädestiniert für den Einsatz in hydraulischen Kupplungsbetätigungen für Kraftfahrzeuge, wo durch geeignete Ausgestaltung der (bzw. des) Stegabschnitte(s) fahrzeugindividuell eine Anpassung erfolgen kann, so dass nur in für das jeweilige Kraftfahrzeug schwingungskritischen Druckbereichen eine höhere Volumenaufnahmefähigkeit durch die gummielastische Membran gegeben ist, welche die Druckpulsationen dann wirksam zu reduzieren vermag.

Neben den Materialeigenschaften der gummielastischen Membran hat für das Knickverhalten des jeweiligen Stegs natürlich dessen Geometrie einen maßgeblichen Einfluss. Ist der Steg im Querschnitt betrachtet zu schlank, wird der Steg schon bei sehr niedrigen Drucklasten wegknicken, was eingedenk der obigen Ausführungen nicht erwünscht ist. Ist der Steg hingegen im Querschnitt betrachtet zu breit, besteht die Möglichkeit, dass der Steg nur gegen den festen Wandabschnitt des Gehäuses verdrückt wird, ohne dass ein Knicken erfolgt. Wie Untersuchungen der Erfinder ergeben haben, sollte vor diesem Hintergrund in zweckmäßiger Ausgestaltung der Membranprofilierung das Verhältnis einer mittleren Breite des (jeweiligen) Stegs zu einer Höhe des (jeweiligen) Stegs im unbelasteten Zustand der Membran größer gleich 1/3 und kleiner gleich 1 sein. Die "Höhe" des (jeweiligen) Stegs meint hierbei den normal zur druckbeaufschlagbaren Fläche der Membran gemessenen Abstand zwischen dem Stegfuß und dem Stegende des (jeweiligen) Stegs, während die "mittlere Breite" des (jeweiligen) Stegs das arithmetische Mittel zwischen einer maximalen Stegbreite und einer minimalen Stegbreite, jeweils gemessen in einer Richtung senkrecht zur obigen Flächennormalen, bezeichnet.

Grundsätzlich sind für die unsymmetrische Ausbildung des (jeweiligen) Stegs, die dessen Knicken begünstigen und dem Knicken eine Richtung geben soll, verschiedene unsymmetrische Stegquerschnitte denkbar, z.B. parallelogrammförmig, dreieckig oder sägezahnförmig. Insbesondere aus herstellungstechnischen Gründen bevorzugt ist indes eine Ausgestaltung, bei der der Stegquerschnitt im Wesentlichen die Form eines Trapezes, insbesondere eines rechtwinkligen Trapezes aufweist, wobei der Stegfuß die Basis des Trapezes bildet.

In weiterer bevorzugter Ausgestaltung kann der (jeweilige) Steg in einer Haupterstreckungsrichtung des Stegs ununterbrochen ausgebildet sein, was insbesondere herstellungstechnische Vorteile hat. Um das Ansprechverhalten der gummielastischen Membran in Richtung kleinerer Drücke zu verschieben, kann der Steg in seiner Haupterstreckungsrichtung aber auch unterbrochen ausgeführt werden. Damit ist der Steg dann etwas "instabiler", d.h. das Knicken erfolgt bei einem geringeren Druck. Wird eine solche Unterbrechung entsprechend häufig ausgeführt, so entstehen ggf. kurze Knickstäbe, die dann bei nochmals niedrigerem Druck knicken. Über die Anzahl der Unterbrechungen eines Stegs kann also dessen Knickverhalten beeinflusst werden: Grundsätzlich gilt, je mehr Unterbrechungen ein Steg aufweist, desto "labiler" wird er, so dass geringere Drucklasten ausreichen, ihn umzulegen.

Im weiteren Verfolg des Erfindungsgedankens kann der (jeweilige) Steg durch zwei um die Breite des Stegs voneinander beabstandete, von der vom Druckraum abgewandten Fläche der Membran ausgehende Nuten des Stegabschnitts ausgebildet sein, wobei sich der Steg mit seinem Stegende im unverformten Zustand der Membran maximal bis auf Höhe der vom Druckraum abgewandten Fläche erstreckt. Im Vergleich zu einer ebenfalls denkbaren, gegenüber dem Rest der gummielastischen Membran erhabenen Profilierung eignet sich eine solche zurückgesetzte oder bündige bzw. in der Membranfläche "aufgenommene" Stegstruktur insbesondere für solche Dämpfungsanwendungen, bei denen am Anfang einer Betätigung des hydraulischen Betätigungssystems, d.h. bei eher niedrigen Drücken nur eine geringe Volumenaufnahme durch die gummielastische Membran gegeben sein soll, später, d.h. bei größeren, schwingungskritischen Drücken indes eine größere Volumenaufnahme, namentlich der oben angesprochene, mit dem Knicken des (jeweiligen) Stegs einhergehende Sprung in der Volumenaufnahme gewünscht ist.

Den jeweiligen Dämpfungserfordernissen entsprechend kann ferner der (jeweilige) Stegabschnitt eine Mehrzahl von Stegen aufweisen, die gleichgerichtet unsymmetrisch ausgebildet sind. Durch das Vorsehen von mehreren Stegen in einem Stegabschnitt kann in einfacher Weise auf die Größe der Volumenaufnahme durch die gummielastische Membran Einfluss genommen werden, wobei durch mehr Stege tendenziell eine größere Volumenaufnahme ermöglicht wird. Hierbei sorgt die räumlich gleiche Ausrichtung der Unsymmetrien der Stegquerschnitte dafür, dass die Stege auch in dieselbe, vorbestimmte Richtung knicken, so dass sich die Stege beim Knicken nicht gegenseitig behindern können und sich somit in reproduzierbarer Weise stets dieselbe Volumenaufnahme im (jeweiligen) Stegabschnitt ergibt.

Weiterhin kann die Profilierung der Membran vorteilhaft eine Mehrzahl von Stegabschnitten aufweisen. Mit Erhöhung der Anzahl der Stegabschnitte kann den jeweiligen Dämpfungserfordernissen entsprechend die Volumenaufnahme durch die gummielastische Membran vergrößert werden. Werden in diesem Zusammenhang z.B. bei der vorbeschriebenen gummielastischen Membran mit zurückgesetzter bzw. bündiger Stegstruktur die Nuten von wenigstens zwei Stegabschnitten von Stegabschnitt zu Stegabschnitt verschieden tief ausgebildet, kann darüber hinaus die erhöhte Volumenaufnahmefähigkeit der gummielastischen Membran über einen größeren Druckbereich "gestreckt" werden. So muss die Vorrichtung nicht nur einen "Betriebspunkt" aufweisen, sondern kann auch verschiedene "Betriebspunkte" besitzen, in denen druckabhängig ein Knicken der jeweiligen Stege stattfindet, um Druckpulsationen in verschiedenen schwingungskritischen Druckbereichen durch sprungartig erhöhte Volumenaufnahme wirksam zu dämpfen.

Was ferner die Grundgeometrie der gummielastischen Membran angeht, sind verschiedene Membranvarianten denkbar. So kann es sich bei der gummielastischen Membran etwa um eine ebene oder gewölbte Scheibe handeln, deren vom Druckraum abgewandte Fläche mit einer erfindungsgemäßen Profilierung versehen ist. Derzeit bevorzugt ist indes eine Ausgestaltung, bei der die gummielastische Membran im Wesentlichen rohrförmig ist. Die erfindungsgemäße Profilierung kann sich dann an einer vom Druckraum abgewandten Innenumfangsfläche der gummielastischen Membran oder, vorzugsweise, an einer vom Druckraum abgewandten Außenumfangsfläche der gummielastischen Membran befinden.

Im Hinblick auf den Verlauf des Stegs bzw. der Stege an einer im Wesentlichen rohrförmigen, gummielastischen Membran sind dann ebenfalls verschiedene Varianten möglich. So kann der Steg z.B. spiralförmig oder in der Art einer Schraubenlinie an der Umfangsfläche der gummielastischen Membran verlaufen. Insbesondere hinsichtlich einer einfachen Herstellung bevorzugt ist es allerdings, wenn der (jeweilige) Steg am Außenumfang der im Wesentlichen rohrförmigen, gummielastischen Membran umlaufend oder in Längsrichtung der rohrförmigen, gummielastischen Membran verlaufend ausgebildet ist.

Als Material für die gummielastische Membran kommen prinzipiell verschiedene Werkstoffe in Frage. So kann etwa ein Elastomer auf Basis Acrylnitril-Butadien-Styrol-Kautschuk (NBR) oder auf Basis eines hydrierten Acrylnitril-Butadien-Styrol-Kautschuk (HNBR) zum Einsatz kommen, insbesondere wenn mineralölhaltige Flüssigkeiten in dem hydraulischen Betätigungssystem verwendet werden. Im Hinblick auf die Beständigkeit gegenüber üblichen Fluiden bei hydraulischen Kupplungsbetätigungen für Kraftfahrzeuge bevorzugt ist derzeit indes eine gummielastische Membran, die aus einem Elastomer auf Basis Ethylen-Propylen-Dien-Kautschuk (EPDM) besteht.

Grundsätzlich kann das Gehäuse der Vorrichtung so ausgestaltet sein, dass es nur einen Anschluss besitzt, über den die Vorrichtung parallel zum hydraulischen Betätigungssystem schaltbar ist. Bevorzugt ist jedoch eine Ausbildung, bei der das Gehäuse einen ersten und einen zweiten Anschluss aufweist, zwischen denen sich der Druckraum befindet und über welche die Vorrichtung in Reihe in das hydraulische Betätigungssystem schaltbar ist, so dass ein Fluidstrom zwischen den Anschlüssen durch den Druckraum hindurchzulaufen vermag, was im Vergleich zur vorerwähnten Alternative mit lediglich einem Anschluss bei nur geringem Strömungswiderstand die bessere Dämpfungswirkung verspricht.

Vorzugsweise ist die Anordnung bei zwei Gehäuseanschlüssen dann so getroffen, dass der erste Anschluss, die den Druckraum umgebende rohrförmige Membran und der zweite Anschluss im Gehäuse auf einer gemeinsamen Achse hintereinander sitzen, wobei jeder Anschluss über einen im Wesentlichen quer zur gemeinsamen Achse verlaufenden, strömungsumlenkenden Verbindungsabschnitt mit dem Druckraum fluidverbunden ist. Diese Ausgestaltung führt vorteilhaft dazu, dass die Druckpulsation in der Flüssigkeitssäule quasi an die rohrförmige Membran herangeführt wird, um sich an dieser wie oben beschrieben schwingungsdämpfend "abzuarbeiten".

Bei dieser Ausgestaltung der Vorrichtung kann ferner zur Erhöhung der Dämpfungswirkung zwischen dem Druckraum und dem Verbindungsabschnitt auf der Seite des ersten Anschlusses und/oder der Seite des zweiten Anschlusses eine Drosselbohrung vorgesehen sein, die sich entlang oder parallel zu der gemeinsamen Achse der Anschlüsse erstreckt, so dass bei einer Betätigung des hydraulischen Betätigungssystems ein Teil der Flüssigkeitssäule durch die (jeweilige) Drosselbohrung hindurch verschoben wird.

Schließlich kann bei zwei in Reihe liegenden Gehäuseanschlüssen die Vorrichtung derart ausgebildet sein, dass es sich bei dem ersten Anschluss um einen Geberanschluss handelt, während es sich bei dem zweiten Anschluss um einen Nehmeranschluss handelt, wobei vom ersten Anschluss aus in Richtung des Druckraums gesehen vor dem Verbindungsabschnitt eine weitere Drosselbohrung oder Engstelle vorgesehen ist, die sich entlang oder parallel zu der gemeinsamen Achse der Anschlüsse erstreckt. Aufgrund dieser weiteren Drosselbohrung, die einen zusätzlichen Widerstand vom Druckraum zum Geberanschluss hin darstellt, hat die gummielastische Membran mehr "Gelegenheit", über den Nehmeranschluss in die Vorrichtung gelangende Druckpulsationen aufzunehmen bzw. abzubauen.

### KURZE BESCHREIBUNG DER ZEICHNUNGEN

Im Folgenden wird die Erfindung anhand eines bevorzugten Ausführungsbeispiels und Varianten hierzu unter Bezugnahme auf die beigefügten schematischen Zeichnungen näher erläutert, in denen gleiche Bezugszeichen gleiche oder entsprechende Teile kennzeichnen und elastomere Teile zur Vereinfachung der Darstellung zumeist im unverformten Zustand gezeigt sind. In den Zeichnungen zeigen:
- Fig. 1: Eine Längsschnittansicht einer erfindungsgemäßen Vorrichtung zur Reduktion von Vibrationen in einer hydraulischen Kupplungsbetätigung für Kraftfahrzeuge, mit einem Gehäuse, in dem in Fig. 1 von rechts nach links gesehen als Hauptbestandteile ein erster Steckstutzen, eine darin aufgenommene Einpresshülse, eine einen Druckraum im Gehäuse nach radial außen begrenzende, rohrförmige, gummielastische Membran mit einer außenumfangsseitigen Profilierung zur Volumenaufnahme und ein zweiter Steckstutzen montiert sind;
- Fig. 2: eine Längsschnittansicht des Gehäuses der Vorrichtung gemäß Fig. 1 als Einzelteil;
- Fig. 3: eine Längsschnittansicht des ersten Steckstutzens der Vorrichtung gemäß Fig. 1 als Einzelteil;
- Fig. 4: eine Längsschnittansicht der Einpresshülse der Vorrichtung gemäß Fig. 1 als Einzelteil;
- Fig. 5: eine Längsschnittansicht des zweiten Steckstutzens der Vorrichtung gemäß Fig. 1 als Einzelteil;
- Fig. 6: eine Längsschnittansicht der rohrförmigen, gummielastischen Membran der Vorrichtung gemäß Fig. 1 als Einzelteil;
- Fig. 7: eine vergrößerte Darstellung des Details VII in Fig. 6, zur Veranschaulichung von Einzelheiten der an der gummielastischen Membran vorgesehenen Profilierung zur Volumenaufnahme, deren Stege am Außenumfang der Membran umlaufend ausgebildet sind;
- Fig. 8: eine vergrößerte Darstellung einer Variante der an der gummielastischen Membran ausgebildeten Profilierung zur Volumenaufnahme mit umlaufenden Stegen, in Ausschnitt und Darstellungsweise entsprechend den Fig. 6 und 7;
- Fig. 9: eine im Maßstab gegenüber der Fig. 6 verkleinerte Seitenansicht einer rohrförmigen, gummielastischen Membran mit einer alternativ ausgestalteten Profilierung zur Volumenaufnahme, deren Stege am Außenumfang der Membran in Längsrichtung verlaufend ausgebildet sind;
- Fig. 10: eine Schnittansicht der rohrförmigen, gummielastischen Membran gemäß Fig. 9 entsprechend der Schnittverlaufslinie X-X in Fig. 9;
- Fig. 11: eine vergrößerte Darstellung des Details XI in Fig. 10, zur Veranschaulichung von Einzelheiten der an der gummielastischen Membran gemäß Fig. 9 vorgesehenen Profilierung zur Volumenaufnahme, insbesondere der unsymmetrischen Ausbildung der Stege der Profilierung;
- Fig. 12: ein Diagramm, in dem die Volumenaufnahme in mm³ über dem Druck in bar für eine entsprechend der Fig. 8 gestaltete Profilierung an der gummielastischen Membran aufgetragen ist, deren Stege erfindungsgemäß unsymmetrisch ausgebildet sind, wobei die Stege für einen Druck von 0 bar in einem unverformten Zustand und bei einem Druck von etwas über 15 bar in einem definiert geknickten Zustand dargestellt sind, als Ergebnis eines FEM-Berechnungsmodells (Finite-Elemente-Methode); und
- Fig. 13: ein dem Diagramm gemäß der Fig. 12 ähnliches Diagramm, in dem wiederum die Volumenaufnahme in mm³ über dem Druck in bar für eine Profilierung an der gummielastischen Membran aufgetragen ist, deren Stege nicht erfindungsgemäß symmetrisch ausgebildet sind, wobei die Stege für einen Druck von 0 bar in einem unverformten Zustand und in einem Druckbereich von ca. 15 bis 22 bar in verschiedenen, undefiniert geknickten Zuständen dargestellt sind, erneut als Ergebnis eines FEM-Berechnungsmodells.

### DETAILLIERTE BESCHREIBUNG DES AUSFÜHRUNGSBEISPIELS

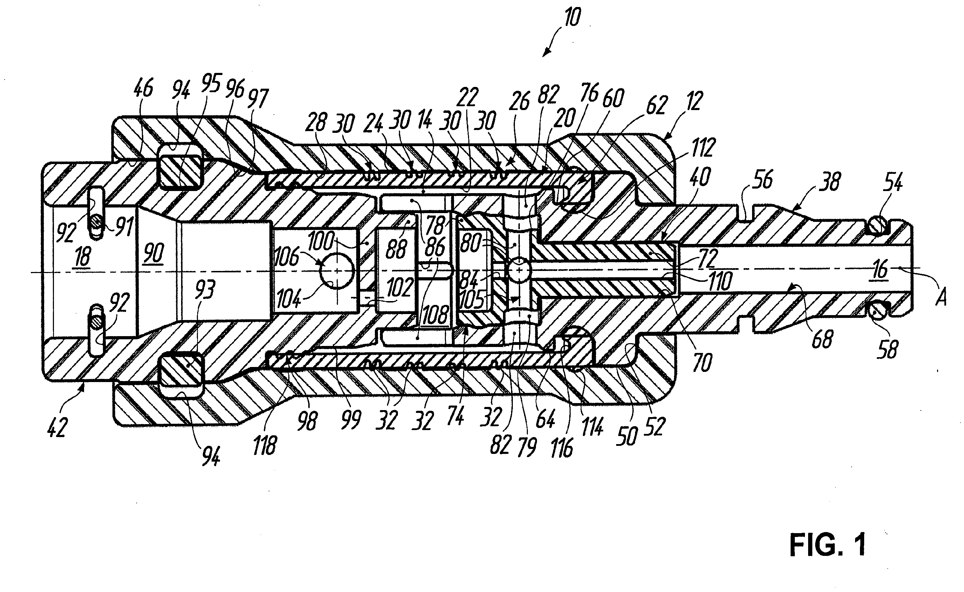

In Fig. 1 beziffert das Bezugszeichen 10 allgemein eine Vorrichtung zur Reduktion von Vibrationen in einem hydraulischen Betätigungssystem, wie beispielsweise einer hydraulischen Kupplungsbetätigung für Kraftfahrzeuge. Die Vorrichtung 10 besitzt ein Gehäuse 12, in dem ein Druckraum 14 ausgebildet ist, der über wenigstens einen, im dargestellten Ausführungsbeispiel zwei Anschlüsse 16, 18 mit dem hydraulischen Betätigungssystem fluidverbunden werden kann. Hierbei befindet sich der Druckraum 14 zwischen den Anschlüssen 16, 18, über welche die Vorrichtung 10 in dieser Ausgestaltung in Reihe in das hydraulische Betätigungssystem geschaltet werden kann, so dass ein Fluidstrom zwischen den Anschlüssen 16, 18 durch den Druckraum 14 hindurchzulaufen vermag.

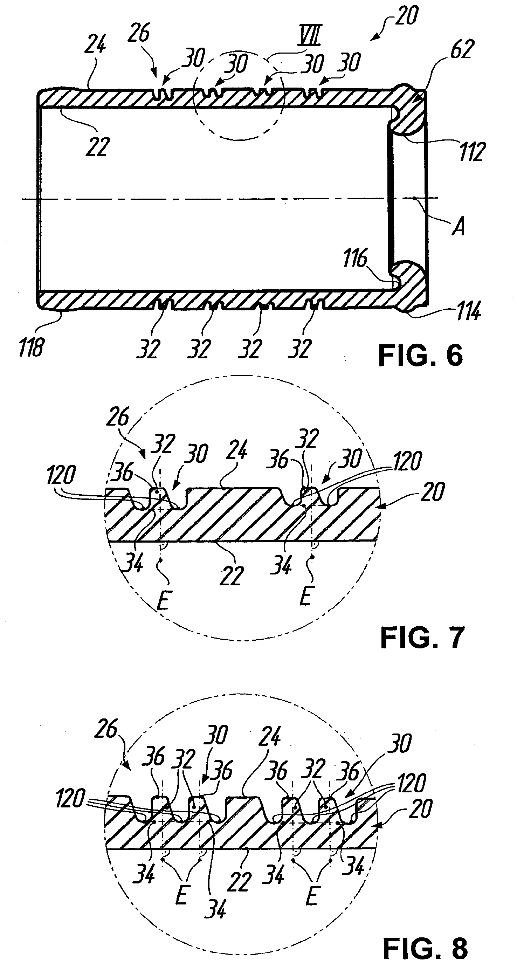

Der Druckraum 14 der Vorrichtung 10 ist dabei von einer in Fig. 6 separat gezeigten, gummielastischen Membran 20 begrenzt, die eine druckbeaufschlagbare, dem Druckraum 14 zugewandte Fläche 22 und eine vom Druckraum 14 abgewandte Fläche 24 aufweist. Letztere ist, wie noch näher beschrieben werden wird, mit einer Profilierung 26 versehen, über die sich die Membran 20 bei Druckbeaufschlagung an einem festen Wandabschnitt 28 des Gehäuses 12 abstützen kann.

Diese Profilierung 26 weist wenigstens einen, im gezeigten Ausführungsbeispiel eine Mehrzahl von Stegabschnitten 30 mit (jeweils) mindestens einem Steg 32 auf. Wie sich insbesondere aus den Fig. 6 und 7 ergibt besitzt jeder Steg 32 einen - im montierten Zustand der Membran 20 - vom Wandabschnitt 28 des Gehäuses 12 fernen Stegfuß 34 (in Fig. 7 jeweils gestrichelt angedeutet), ein dem Wandabschnitt 28 des Gehäuses 12 nahes Stegende 36 und einen definierten Stegquerschnitt. Wesentlich ist, dass, wie ebenfalls noch näher erläutert werden wird, der oder jeder Steg 32 bezüglich einer bzw. jeder gedachten Ebene E (in Fig. 7 jeweils mittig am Stegfuß 34 mit strichpunktierter Linie angedeutet), die normal zur druckbeaufschlagbaren Fläche 22 der Membran 20 durch den Stegfuß 34 und senkrecht zum Stegquerschnitt verläuft, unsymmetrisch ausgebildet ist, so dass der oder jeder Steg 32 bei vorbestimmter Druckbeaufschlagung der Membran 20 unter Anlage des Stegendes 36 am festen Wandabschnitt 28 des Gehäuses 12 in vorbestimmter Richtung unbehindert knickt.

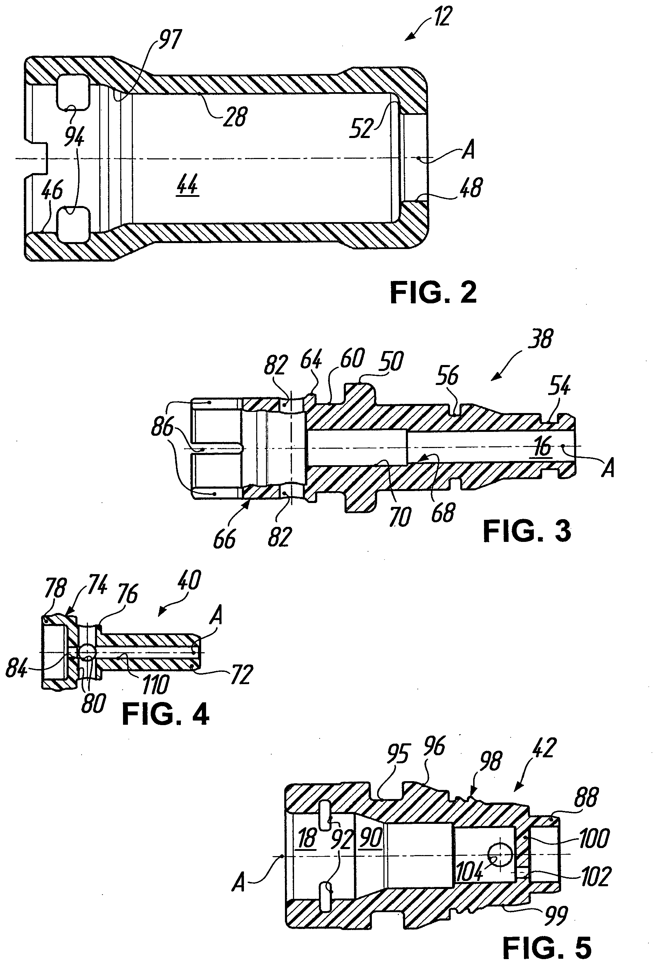

Wie der Fig. 1 weiterhin zu entnehmen ist weist die - nur aus wenigen, im Betrieb nicht beweglichen Teilen gebildete - Vorrichtung 10 neben dem in Fig. 2 separat gezeigten, aus Kunststoff spritzgegossenen Gehäuse 12 und der in Fig. 6 dargestellten gummielastischen Membran 20, welche z.B. aus einem Elastomer auf Basis Ethylen-Propylen-Dien-Kautschuk (EPDM) besteht, weitere aus Kunststoff spritzgegossene Teile auf, die in dem Gehäuse 12 befestigt sind und dieses komplettieren. Diese Teile sind in den Fig. 3 bis 5 einzeln gezeigt, nämlich ein als Steckteil den Anschluss 16 der Vorrichtung 10 ausbildender erster Steckstutzen 38 (Fig. 3), eine darin aufgenommene Einpresshülse 40 (Fig. 4) sowie ein zweiter Steckstutzen 42 (Fig. 5), der als Steckbuchsenteil den Anschluss 18 der Vorrichtung 10 ausbildet.

Gemäß Fig. 2 ist das Gehäuse 12 der Vorrichtung 10 hierbei mit einer zentralen, gestuften Durchgangsbohrung 44 versehen, die im Wesentlichen drei Abschnitte mit in Fig. 2 von links nach rechts abnehmendem Innendurchmesser aufweist, und zwar einem in Fig. 2 linken Befestigungsabschnitt 46 für den zweiten Steckstutzen 42, dem mittigen, festen Wandabschnitt 28 als Andruck- oder Gegenfläche für die gummielastische Membran 20 und einem in Fig. 2 rechten Durchsteckabschnitt 48 für den ersten Steckstutzen 38.

In dem Durchsteckabschnitt 48 des Gehäuses 12 ist der erste Steckstutzen 38 mittels einer Pressverbindung befestigt, wobei ein am Außenumfang des ersten Steckstutzens 38 angeformter Ringbund 50 innen im Gehäuse 12 an einer Schulter 52 des Gehäuses 12 anliegt, die zwischen dem Wandabschnitt 28 und dem Durchsteckabschnitt 48 der Durchgangsbohrung 44 ausgebildet ist. Im in Fig. 1 gezeigten eingepressten Zustand steht der erste Steckstutzen 38 mit an sich bekannter Steckgeometrie über das Gehäuse 12 vor, die außenumfangsseitig zwei axial beabstandete Radialnuten 54, 56 aufweist, von denen die äußere Radialnut 54 der Aufnahme eines O-Rings 58 für die Abdichtung zum (Aufnahme)Gegenteil (nicht gezeigt) dient, während die zweite Radialnut 56 im montierten Zustand der Vorrichtung 10 ein am (Aufnahme)Gegenteil befestigtes Sicherungselement (nicht dargestellt) aus Federstahldraht aufnimmt.

Auf der in den Fig. 1 und 3 linken Seite des Ringbunds 50 schließt sich an diesen eine weitere Radialnut 60 des ersten Steckstutzens 38 an, die der Aufnahme einer endseitigen Dichtgeometrie 62 (vgl. Fig. 6) der in diesem Ausführungsbeispiel im Wesentlichen rohrförmigen Membran 20 dient. Auf die Radialnut 60 folgt nach links in den Fig. 1 und 3 ein weiterer Ringbund 64 bevor der erste Steckstutzen 38 mit einem im Wesentlichen ringförmigen Aufnahme- und Zentrierabschnitt 66 endet, dessen Außendurchmesser kleiner als der Innendurchmesser der Innenumfangsfläche 22 der Membran 20 ist, so dass der Aufnahme- und Zentrierabschnitt 66 des ersten Steckstutzens 38 den im Wesentlichen ringförmigen Druckraum 14 der Vorrichtung 10 nach radial innen begrenzt.

Innenumfangsseitig ist der erste Steckstutzen 38 in den Fig. 1 und 3 nach rechts an den Aufnahme- und Zentrierabschnitt 66 anschließend ebenfalls mit einer zentralen, einfach gestuften Durchgangsbohrung 68 versehen, deren in Fig. 1 linker, durchmessergrößerer Bohrungsabschnitt 70 wie dort gezeigt der engen Aufnahme eines rohrförmigen Fortsatzes 72 der Einpresshülse 40 dient, während der in Fig. 1 rechte, durchmesserkleinere Bohrungsabschnitt der Durchgangsbohrung 68 den lichten Öffnungsquerschnitt des Anschlusses 16 definiert.

Die Einpresshülse 40 besitzt ferner einen am Außenumfang einfach gestuften Kopf 74, von dem sich der rohrförmige Fortsatz 72 in den Fig. 1 und 4 nach rechts wegerstreckt. Der Kopf 74 der Einpresshülse 40 umfasst dabei einen mit dem rohrförmigen Fortsatz 72 verbundenen, durchmesserkleineren Mittelabschnitt 76 und einen durchmessergrößeren Kragenabschnitt 78 an seinem freien Ende. Während die Einpresshülse 40 mittels des Kragenabschnitts 78 des Kopfs 74 form- und kraftschlüssig im Aufnahme- und Zentrierabschnitt 66 des ersten Steckstutzens 38 gehalten ist, begrenzt der Mittelabschnitt 76 des Kopfs 74 zusammen mit einer Innenumfangsfläche des Aufnahme- und Zentrierabschnitts 66 des ersten Steckstutzens 38 einen ringförmigen Zwischenraum 79 (siehe Fig. 1) zwischen Einpresshülse 40 und Steckstutzen 38.

Der Mittelabschnitt 76 des Kopfs 74 der Einpresshülse 40 ist des Weiteren mit zwei Querbohrungen 80 versehen, die zueinander und zum rohrförmigen Fortsatz 72 rechtwinklig verlaufen und in dem Zwischenraum 79 münden, wie in Fig. 1 gezeigt. Einander diametral gegenüberliegende, ggf. mit einer der Querbohrungen 80 im Kopf 74 der Einpresshülse 40 ausgefluchtete Verbindungsbohrungen 82 im Aufnahme- und Zentrierabschnitt 66 des ersten Steckstutzens 38 verbinden den Zwischenraum 79 mit dem Druckraum 14 zwischen Steckstutzen 38 und Membran 20. Außerdem ist die Einpresshülse 40 im Bereich des Kopfs 74 noch mit einer Drosselbohrung 84 versehen, welche die Querbohrungen 80 mit dem Inneren des Kragenabschnitts 78 des Kopfs 74 verbindet.

Wie sich weiterhin aus Fig. 1 ergibt dient der Aufnahme- und Zentrierabschnitt 66 des ersten Steckstutzens 38 an seinem freien, mit Längsschlitzen 86 versehenen Ende schließlich noch der engen Aufnahme eines Zentrierkragens 88 des zweiten Steckstutzens 42.

Der zweite Steckstutzen 42 ist gemäß den Fig. 1 und 5 als Steckbuchsen- oder Aufnahmeteil mit innenumfangsseitiger, an sich bekannter Aufnahmegeometrie ausgebildet, umfassend eine Aussparung 90, in die das (Steck)Gegenteil (nicht gezeigt) einsteckbar ist, und ein vornehmlich außenumfangsseitig angeordnetes Sicherungselement 91 aus Federstahldraht (in Fig. 1 angedeutet), das quer zum Anschluss 18 verlaufende Steckschlitze 92 im zweiten Steckstutzen 42 durchgreift, um im montierten Zustand der Vorrichtung 10 das (Steck)Gegenteil auf an sich bekannte Weise in der Aussparung 90 zu sichern.

Der zweite Steckstutzen 42 selbst ist in analoger Weise im Gehäuse 12 formschlüssig gehalten, wobei ein wiederum in Fig. 1 bei 93 angedeutetes, bügelförmiges Sicherungselement aus Kunststoff in der Art eines Querschiebers zugeordnete Aussparungen 94 im Befestigungsabschnitt 46 des Gehäuses 12 durchgreift, um mit einer am Außenumfang des zweiten Steckstutzens 42 ausgebildeten Radialnut 95 in Eingriff zu stehen und damit den zweiten Steckstutzen 42 im Gehäuse 12 zu halten.

In Fig. 5 nach rechts folgt am Außenumfang des zweiten Steckstutzens 42 der Radialnut 95 ein teilweise abgeschrägter Fügeabschnitt 96, der zusammen mit einem komplementär geformten Übergangsabschnitt 97 zwischen dem Befestigungsabschnitt 46 und dem hohlzylindrischen Wandabschnitt 28 des Gehäuses 12 die axiale Einstecktiefe des zweiten Steckstutzens 42 im Gehäuse 12 begrenzt. Wiederum in Fig. 5 nach rechts schließt sich an den Fügeabschnitt 96 des zweiten Steckstutzens 42 nach einer Stufe ein Befestigungsabschnitt 98 für die Membran 20 an, der mit einer sägezahnartigen Profilierung versehen ist, um sich innenumfangsseitig mit den in Fig. 1 linken Ende der Membran 20 zu verkrallen. Dem Befestigungsabschnitt 98 folgt sodann in Fig. 5 nach rechts ein durchmesserkleinerer Endabschnitt 99 des zweiten Steckstutzens 42, der ebenso wie der Aufnahme- und Zentrierabschnitt 66 des ersten Steckstutzens 38 den ringförmigen Druckraum 14 nach radial innen begrenzt (siehe Fig. 1).

Gemäß den Fig. 1 und 5 endet die Aussparung 90 im zweiten Steckstutzen 42 axial im Bereich des Endabschnitts 99 an einem Bodenabschnitt 100 des zweiten Steckstutzens 42, an den sich der Zentrierkragen 88 anschließt. Der Bodenabschnitt 100 ist mit einer exzentrisch angeordneten Drosselbohrung 102 versehen, welche die Aussparung 90 im zweiten Steckstutzen 42 mit dem Inneren des Zentrierkragens 88 verbindet. Schließlich ist im zweiten Steckstutzen 42 noch eine Querbohrung 104 ausgebildet, die sich vollständig durch den Endabschnitt 99 hindurch erstreckt, um die Aussparung 90 mit dem Druckraum 14 zu verbinden.

Insoweit ist ersichtlich das im montierten Zustand der Vorrichtung 10 (siehe Fig. 1) der erste Anschluss 16, die den Druckraum 14 umgebende rohrförmige Membran 20 und der zweite Anschluss 18 im Gehäuse 12 auf einer gemeinsamen Achse A hintereinander angeordnet sind. Hierbei ist jeder Anschluss 16, 18 mit dem Druckraum 14 über einen im Wesentlichen quer zur gemeinsamen Achse verlaufenden, strömungsumlenkenden Verbindungsabschnitt 105, 106 fluidverbunden, der (105) im dargestellten Ausführungsbeispiel auf der Seite des ersten Anschlusses 16 die Querbohrungen 80 im Mittelabschnitt 76 der Einpresshülse 40, den Zwischenraum 79 zwischen Einpresshülse 40 und Steckstutzen 38 sowie die Verbindungsbohrungen 82 im ersten Steckstutzen 38 umfasst, während der Verbindungsabschnitt 106 auf der Seite des Anschlusses 18 durch die Querbohrung 104 ausgebildet ist. Der Druckraum 14 selbst kommuniziert mit dem von dem Kragenabschnitt 78 der Einpresshülse 40, dem Aufnahme- und Zentrierabschnitt 66 des ersten Steckstutzens 38 sowie dem Zentrierkragen 88 des zweiten Steckstutzens 42 radial begrenzten Innenraum 108 zwischen Einpresshülse 40 und Steckstutzen 42 über die Längsschlitze 86 im Aufnahme- und Zentrierabschnitt 66 des ersten Steckstutzens 38. Außerdem sind zwischen dem Druckraum 14 und dem Verbindungsabschnitt 105 auf der Seite des ersten Anschlusses 16 und zwischen dem Druckraum 14 und dem Verbindungsabschnitt 106 auf der Seite des zweiten Anschlusses 18 noch die über den Innenraum 108 und die Längsschlitze 86 zum Druckraum 14 fluidverbindenden Drosselbohrungen 84, 102 vorgesehen, die sich entlang bzw. parallel zu der gemeinsamen Achse A erstrecken.

Der Einbau der Vorrichtung 10 im hydraulischen Betätigungssystem erfolgt vorzugsweise derart, dass der erste Anschluss 16 als Geberanschluss fungiert, während der zweite Anschluss 18 als Nehmeranschluss dient. Dabei bildet der rohrförmige Fortsatz 72 der Einpresshülse 40 eine weitere Drosselbohrung 110 aus, die vom ersten Anschluss 16 aus in Richtung des Druckraums 14 gesehen vor dem Verbindungsabschnitt 105 liegt und sich hier entlang der gemeinsamen Achse A erstreckt.

Die gummielastische Membran 20 dichtet die Vorrichtung 10 auch zur Umgebung hin ab, und zwar zwischen dem Gehäuse 12 und dem ersten Steckstutzen 38 sowie zwischen dem Gehäuse 12 und dem zweiten Steckstutzen 42. Weitere Details hierzu sind den Fig. 1 und 6 zu entnehmen. Demgemäß dient zur Abdichtung zwischen dem Gehäuse 12 und dem ersten Steckstutzen 38 die in Fig. 6 am rechten Ende der Membran 20 ausgebildete Dichtgeometrie 62. Letztere umfasst einen von der dem Druckraum 14 zugewandten Fläche 22 der Membran 20 nach radial innen vorspringenden, im Wesentlichen ballig geformten Ringbund 112, der in der Radialnut 60 des ersten Steckstutzens 38 aufgenommen ist, einen an der vom Druckraum 14 abgewandten Fläche 24 ausgebildeten, umlaufenden Dichtwulst 114 sowie eine Axialnut 116, die auf der dem Druckraum 14 zugewandten Seite des Ringbunds 112 ausgeformt ist. Für den Fachmann ist ersichtlich, dass ein in der Axialnut 116 der Membran 20 vom Druckraum 14 her anstehender Druck deren Dichtgeometrie 62 mit den angrenzenden Flächen von Gehäuse 12 und Steckstutzen 38 zusätzlich verpresst. Auch an dem in den Fig. 1 und 6 linken Ende der Membran 20 ist an der vom Druckraum 14 abgewandten Fläche 24 ein umlaufender Dichtwulst 118 vorgesehen, der bei Anlage an dem Wandabschnitt 28 des Gehäuses 12 dazu dient, das linke Ende der Membran 20 mit der sägezahnartigen Profilierung am Befestigungsabschnitt 98 des zweiten Steckstutzens 42 fest zu verpressen und dabei auch zwischen dem Gehäuse 12 und dem zweiten Steckstutzen 42 abzudichten.

Nachfolgend sollen weitere Details zu der Geometrie der Stege 32 an der gummielastischen Membran 20 und deren Effekt anhand der Fig. 7, 8, 12 und 13 beschrieben werden. Hierbei zeigt die Fig. 7 einen Teil der an der Membran 20 des Ausführungsbeispiels gemäß Fig. 1 ausgebildeten Profilierung zur Volumenaufnahme, bei der jeder Stegabschnitt 30 nur einen Steg 32 aufweist, während die Fig. 8 eine Variante illustriert, bei der jeder Stegabschnitt 30 zwei (oder mehr), also eine Mehrzahl von Stegen 32 umfasst, die gleichgerichtet unsymmetrisch ausgebildet sind.

Gemein ist diesen Beispielen zunächst, dass der Stegquerschnitt im Wesentlichen die Form eines Trapezes, insbesondere eines rechtwinkligen Trapezes aufweist, wobei der jeweilige Stegfuß 34 die Basis des Trapezes bildet. Hierbei ist jeder der Stege 32 durch zwei um die Breite des jeweiligen Stegs 32 voneinander beabstandete, von der vom Druckraum 14 abgewandten Fläche 24 der Membran 20 ausgehende Nuten 120 des entsprechenden Stegabschnitts 30 ausgebildet, wobei sich der Steg 32 mit seinem Stegende 36 im dargestellten unverformten Zustand der Membran 20 maximal bis auf Höhe der vom Druckraum 14 abgewandten Fläche 24 erstreckt.

Gemäß Fig. 7 sind die Nuten 120 von wenigstens zwei - hier allen (vgl. die Fig. 1 und 6) - Stegabschnitten 30 von Stegabschnitt 30 zu Stegabschnitt 30 verschieden tief ausgebildet. Hieraus ergibt sich, dass bei dem Ausführungsbeispiel gemäß den Fig. 1, 6 und 7 die Stege 32 verschiedener Stegabschnitte 30 verschieden hoch sind, um unter Druck ein unterschiedliches Knickverhalten zu generieren. Bei der Variante gemäß Fig. 8 hingegen sind sämtliche Stege 32 gleich hoch, so dass ein Knicken der Stege 32 bei in etwa ein und demselben Druck zu erwarten steht. Generell sollte das Verhältnis einer mittleren Breite des einzelnen Stegs 32 zu seiner Höhe größer gleich 1/3 und kleiner gleich 1 sein, wie schon eingangs erwähnt.

Bei den Beispielen gemäß den Fig. 7 und 8 ist der einzelne Steg 32 schließlich am Außenumfang der im Wesentlichen rohrförmigen Membran 20 vollständig umlaufend ausgebildet, so dass der Steg 32 in seiner Haupterstreckungsrichtung ununterbrochen ist.

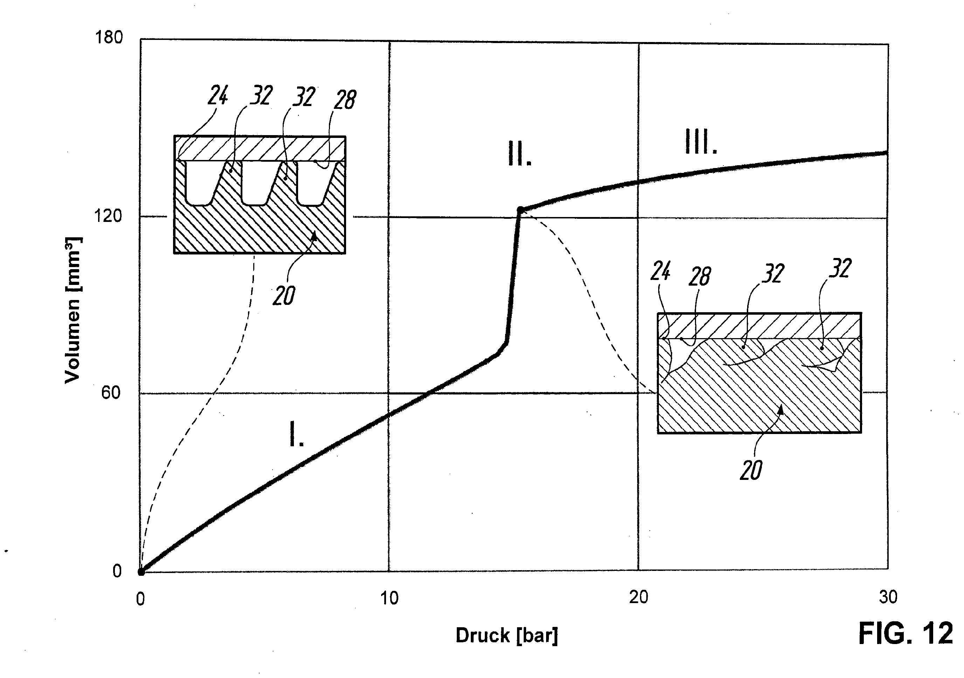

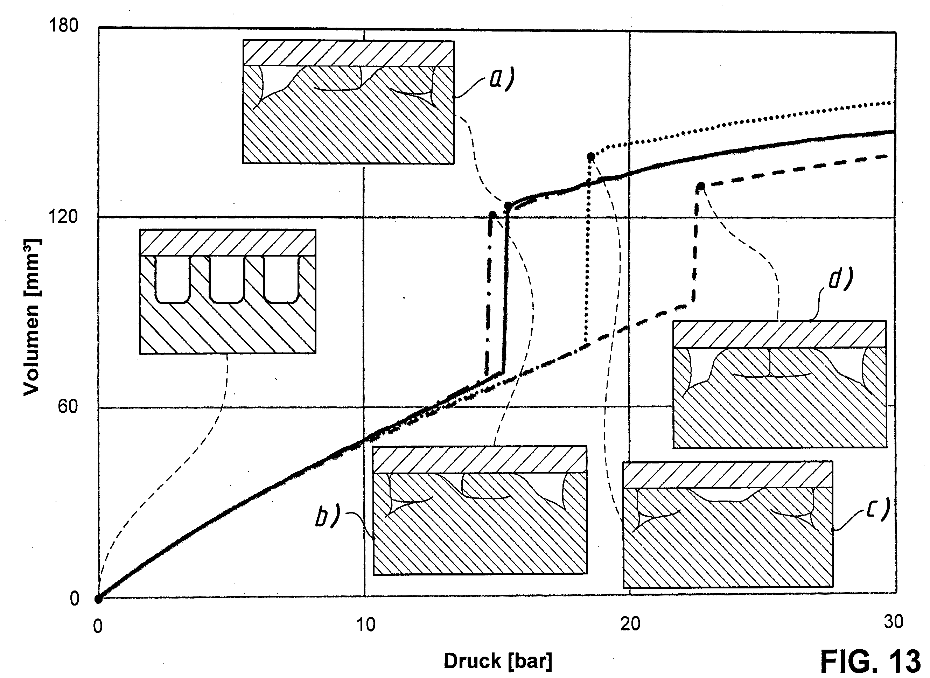

Die Fig. 12 und 13 veranschaulichen nun den Effekt der gewählten, unsymmetrischen Querschnittsform der Stege 32 (siehe das Bild in Fig. 12 links oben) im Vergleich zu Stegen, die eine nicht erfindungsgemäße, symmetrische Querschnittsform besitzen (vgl. das Bild in Fig. 13 links mittig). Die in den Fig. 12 und 13 dargestellten Kennlinien und Verformungen sind hierbei ein Ergebnis eines FEM-Berechnungsmodells mit folgenden Parametern: Es wurde jeweils mit einem rotationssymmetrischen Zylinderrohr gerechnet, vergleichbar der vorbeschriebenen gummielastischen Membran 20, mit einem Innenradius von 5,9 mm und einem Außenradius von 9,2 mm. Als Material für das Zylinderrohr wurde Gummi mit einer Härte von 70 Shore A simuliert. Die Höhe bzw. freie Länge der Stege betrug 1,1 mm, die Breite der Stege mit symmetrischer Querschnittsform 0,5 mm. An der Innenwand wurde ein Druck von 0 bis 30 bar angelegt. Die Außenwand und die Seiten des Zylinderrohrs wurden durch feste Wandflächen begrenzt.

Die in Fig. 12 gezeigten Ergebnisse zum erfindungsgemäßen, unsymmetrischen Profil der Stege 32 lassen sich wie folgt zusammenfassen: In einem ersten Teilbereich I, vor dem Knicken der Stege 32, verläuft die Volumen-Druck-Kennlinie flach und weitgehend linear bzw. nur wenig degressiv. Die Stege 32 werden in der Höhe etwas gestaucht, was zu einer im Verhältnis geringen Volumenzunahme führt.

Wird der Druck und damit die auf den jeweiligen Steg 32 wirkende Kraft weiter erhöht, so führt dies zu einem Stabilitätsverlust der Stege 32. Die Stege 32 kippen bzw. knicken mit einer definierten, einheitlichen Knickrichtung (hier nach rechts) zur Seite (siehe das in Fig. 12 rechte Bild der Stege 32). Einflüsse wie z.B. Bauteiltoleranzen, lokale Reibwertänderungen, Materialschwankungen, Vibrationen und Temperaturänderungen führen hierbei nicht zu einer Änderung der Knickrichtung, die definierte Knickrichtung bleibt erhalten. In diesem zweiten Teilbereich II verläuft die Volumen-Druck-Kennlinie fast sprungartig, d.h. sehr steil und progressiv.

Im nachfolgenden dritten Teilbereich III verläuft die Volumen-Druck-Kennlinie wieder flach und weitgehend linear bzw. nur wenig degressiv. Der verbleibende Hohlraum zwischen den geknickten Stegen 32 wird bei weiterer Druckzunahme reduziert, was die weitere, eher geringe Volumenzunahme erklärt.

Im Ergebnis ergibt sich infolge der klar definierten Knickrichtung der Stege 32 mit unsymmetrischer Querschnittsform eine stets reproduzierbare Volumen-Druck-Kennlinie. Auf den Druckwert des Knickens kann hierbei insbesondere durch das gummielastische Material der Membran 20 und die Geometrie der Stege 32 Einfluss genommen werden: So nimmt die Steifigkeit des Bauteils mit steigender Shorehärte zu, womit sich der "Knickpunkt" der Volumen-Druck-Kennlinie nach rechts (höherer Druck) verschiebt. Mit weicheren Gummimischungen hingegen kann der Druck nach links, zu geringeren Drücken, verschoben werden. Was die Geometrie der Stege 32 angeht, kann gesagt werden, dass die Wahl einer "schlankeren" Form der Stege 32 (dünner und/oder höher) ein Knicken der Stege 32 bei einem geringeren Druck zur Folge hat. Erhöht man hingegen die Steifigkeit der Stege 32 (dicker und/oder niedriger), so knicken die Stege 32 erst bei einem höheren Druck. Es ist freilich dafür Sorge zu tragen, dass die Breite der Stege 32 nicht zu groß und/oder die Höhe der Stege 32 nicht zu gering ausfällt, sonst kann der Steg 32 nicht seitlich knicken und es ergibt sich folglich kein progressiver Teilbereich in der Volumen-Druck-Kennlinie.

Die in Fig. 13 dargestellten Ergebnisse zum nicht erfindungsgemäßen, symmetrischen Profil der Stege lassen sich wie folgt zusammenfassen: Die symmetrisch ausgebildeten Stege besitzen eine undefinierte Knickrichtung bzw. ein undefiniertes Knickverhalten. Schon geringfügige Änderungen können dazu führen, dass derselbe Steg einmal nach links, im anderen Fall nach rechts knickt. Als mögliche Einflussfaktoren zu sehen sind hier lokale Reibwertänderungen, Bauteiltoleranzen, Vibrationen, Materialschwankungen und Temperaturänderungen. Die Stege können demnach in folgende Richtungen knicken, wie in den Bildern in Fig. 13 gezeigt: a) Beide Stege nach rechts; b) beide Stege nach links; c) beide Stege jeweils nach außen; und d) beide Stege jeweils nach innen. Aufgrund der undefinierten Knickrichtung ist hier die Streubreite der Volumen-Druck-Kennlinie sehr groß.

Im Einzelnen: Zu a) und b): Knicken beide Stege in dieselbe Richtung, so geschieht dies bei einem geringeren Druck als bei entgegengesetzter Knickrichtung der Stege. Der Einfluss ist im umliegenden Materialgrund der Stege zu suchen. Knicken beide Stege in dieselbe Richtung, so bewegt sich auch der gesamte Grund der Stege in eine Richtung. Zu c) und d): Knicken die Stege in entgegengesetzte Richtungen, so bauen sich im Materialgrund zwischen den Stegen zusätzlich Zug- oder Druckspannungen auf, je nach Knickrichtung. Hierzu ist mehr Kraft nötig, welche ebenfalls durch den anliegenden Druck geliefert wird. Daher knicken Stege entgegengesetzt erst bei etwas höheren Drücken. Ein weiterer Grund für den höheren Druck beim Knicken dürfte darin liegen, dass die entgegengesetzte Knickform eine größere Steifigkeit besitzt. Zu c): Knicken beide Stege nach außen, so führt dies dazu, dass die Steifigkeit, besonders in der Mitte zwischen den Stegen, geringer wird. Dies bedingt eine größere Verformung beim Knicken und damit eine höhere Volumenaufnahme des Bauteils. Aus diesem Grund liegt die Volumen-Druck-Kennlinie nach dem Knicken hier oberhalb der anderen Kennlinien. Zu d): Knicken beide Stege nach innen, so führt dies dazu, dass die Steifigkeit des Bauteils, besonders zwischen den Stegen, die sich ggf. aneinander abstützen, steigt. Dies bedingt eine geringere Verformung beim Knicken und damit eine geringere Volumenaufnahme des Bauteils. Aus diesem Grund liegt die Volumen-Druck-Kennlinie hier nach dem Knicken unterhalb der anderen Kennlinien. Die erhöhte Steifigkeit dieser Knickform führt auch dazu, dass der Vorgang des Knickens erst bei einem höheren Druck erfolgt.

Im Ergebnis ist festzuhalten, dass sich infolge der nicht definierten Knickrichtung der Stege mit symmetrischer Querschnittsform eine nicht eindeutig vorhersagbare Volumen-Druck-Kennlinie des Bauteils ergibt, was einer gezielten Volumenaufnahme bei einem Druck von vorbestimmter Höhe zuwiderläuft.

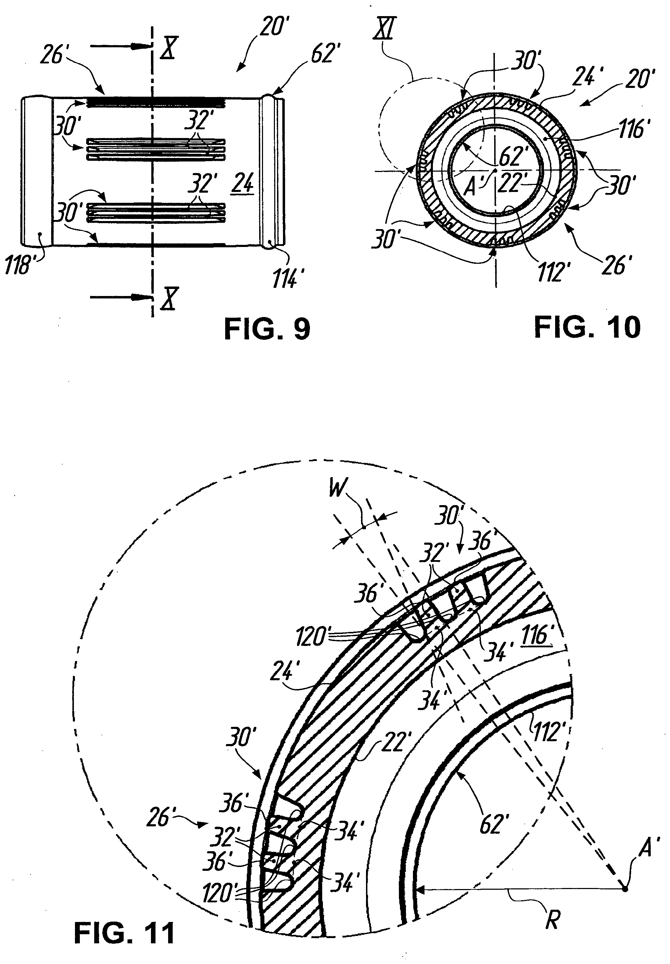

Die Fig. 9 bis 11 zeigen schließlich noch eine rohrförmige, gummielastische Membran 20', die in der oben unter Bezugnahme auf insbesondere die Fig. 1 beschriebenen Vorrichtung 10 anstelle der Membran 20 zum Einsatz kommen kann, hierzu gleiche Dichtmaßnahmen aufweist (Dichtgeometrie 62' mit Dichtwulst 114' am in Fig. 9 rechten Ende sowie Dichtwulst 118' am in Fig. 9 linken Ende) und im Vergleich zu der Membran 20 mit einer alternativ ausgebildeten Profilierung 26' zur Volumenaufnahme versehen ist. Die Stegabschnitte 30' dieser Profilierung 26' weisen jeweils zwei Stege 32' auf, die in Längsrichtung der rohrförmigen Membran 20' verlaufend geformt sind und sich damit im Einbaufalle in etwa über die gesamte Länge des Druckraums 14 erstrecken.

Wie die Fig. 11 zeigt sind dabei die in Längsrichtung verlaufenden Nuten 120' so ausgebildet, dass jeder Steg 32' eine um die Achse A' gesehen im Uhrzeigersinn liegende Seite bzw. Flanke aufweist, die sich in radialer Richtung erstreckt, während eine um die Achse A' gesehen entgegen dem Uhrzeigersinn liegende Seite bzw. Flanke jedes Stegs 32' mit der radialen Richtung einen spitzen Winkel W einschließt. Hierdurch ergibt sich die gewollte Unsymmetrie des Stegquerschnitts, die ein klar definiertes Knickverhalten des jeweiligen Stegs 32' bedingt, nämlich im Uhrzeigersinn um die Achse A', analog der vorbeschriebenen Profilierung 26 an der Membran 20.

Auch hier können die Nuten 120' von Stegabschnitt 30' zu Stegabschnitt 30' verschieden tief ausgebildet sein, was in den Fig. 9 bis 11 indes nicht gezeigt ist, wie auch die Anzahl der Stegabschnitte 30', deren Länge und Verteilung über dem Umfang der Membran 20' (z.B. gleichmäßig winkelbeabstandet um die Achse A', wie im dargestellten Beispiel) sowie die Anzahl der Stege 32' pro Stegabschnitt 30' den jeweiligen Volumenaufnahmeerfordernissen entsprechend variiert werden kann.

Eine Vorrichtung zur Schwingungsreduktion in einem hydraulischen Betätigungssystem hat ein Gehäuse, in dem ein über wenigstens einen Anschluss mit dem Betätigungssystem fluidverbindbarer, von einer gummielastischen Membran begrenzter Druckraum ausgebildet ist. Die Membran weist eine druckbeaufschlagbare Fläche und eine hiervon abgewandte Fläche auf, die mit einer Profilierung versehen ist, über welche sich die Membran bei Druckbeaufschlagung an einem festen Wandabschnitt des Gehäuses abstützen kann und die wenigstens einen Stegabschnitt besitzt, der mindestens einen Steg mit einem Stegfuß, einem dem Wandabschnitt nahen Stegende und einem definierten Stegquerschnitt umfasst. Der Steg ist bezüglich einer gedachten Ebene, die normal zur druckbeaufschlagbaren Fläche durch den Stegfuß und senkrecht zum Stegquerschnitt verläuft, unsymmetrisch ausgebildet, so dass der Steg bei vorbestimmter Druckbeaufschlagung der Membran unter Anlage des Stegendes am Wandabschnitt in vorbestimmter Richtung unbehindert knickt und damit eine definierte Volumenaufnahme bewirkt.

### BEZUGSZEICHENLISTE

- 10: Vorrichtung
- 12: Gehäuse
- 14: Druckraum
- 16: Anschluss
- 18: Anschluss
- 20, 20': Membran
- 22, 22': dem Druckraum zugewandte Fläche
- 24, 24': vom Druckraum abgewandte Fläche
- 26, 26': Profilierung
- 28: Wandabschnitt
- 30, 30': Stegabschnitt
- 32, 32': Steg
- 34, 34': Stegfuß
- 36, 36': Stegende
- 38: erster Steckstutzen
- 40: Einpresshülse
- 42: zweiter Steckstutzen
- 44: Durchgangsbohrung
- 46: Befestigungsabschnitt
- 48: Durchsteckabschnitt
- 50: Ringbund
- 52: Schulter
- 54: Radialnut
- 56: Radialnut
- 58: O-Ring
- 60: Radialnut
- 62, 62': Dichtgeometrie
- 64: Ringbund
- 66: Aufnahme- und Zentrierabschnitt
- 68: Durchgangsbohrung
- 70: Bohrungsabschnitt
- 72: rohrförmiger Fortsatz
- 74: Kopf
- 76: Mittelabschnitt
- 78: Kragenabschnitt
- 79: Zwischenraum
- 80: Querbohrung
- 82: Verbindungsbohrung
- 84: Drosselbohrung
- 86: Längsschlitz
- 88: Zentrierkragen
- 90: Aussparung
- 91: Sicherungselement
- 92: Steckschlitz
- 93: Sicherungselement
- 94: Aussparung
- 95: Radialnut
- 96: Fügeabschnitt
- 97: Übergangsabschnitt
- 98: Befestigungsabschnitt
- 99: Endabschnitt
- 100: Bodenabschnitt
- 102: Drosselbohrung
- 104: Querbohrung
- 105: Verbindungsabschnitt
- 106: Verbindungsabschnitt
- 108: Innenraum
- 110: Drosselbohrung
- 112, 112': Ringbund
- 114, 114': Dichtwulst
- 116, 116': Axialnut
- 118, 118': Dichtwulst
- 120, 120': Nut

- A, A': Achse
- E: gedachte Ebene
- W: Winkel

## Patentansprüche

1. Vorrichtung (10) zur Reduktion von Vibrationen in einem hydraulischen Betätigungssystem, insbesondere einer hydraulischen Kupplungsbetätigung für Kraftfahrzeuge, mit einem Gehäuse (12), in dem ein Druckraum (14) ausgebildet ist, der über wenigstens einen Anschluss (16, 18) mit dem hydraulischen Betätigungssystem fluidverbindbar und von einer gummielastischen Membran (20, 20') begrenzt ist, die eine dem Druckraum (14) zugewandte, druckbeaufschlagbare Fläche (22, 22') und eine vom Druckraum (14) abgewandte Fläche (24, 24') aufweist, wobei Letztere mit einer Profilierung (26, 26') versehen ist, über die sich die Membran (20, 20') bei Druckbeaufschlagung an einem festen Wandabschnitt (28) des Gehäuses (12) abzustützen vermag und welche wenigstens einen Stegabschnitt (30, 30') mit mindestens einem Steg (32, 32') aufweist, der einen vom Wandabschnitt (28) fernen Stegfuß (34, 34'), ein dem Wandabschnitt (28) nahes Stegende (36, 36') und einen definierten Stegquerschnitt besitzt, **dadurch gekennzeichnet, dass** der oder jeder Steg (32, 32') bezüglich einer gedachten Ebene (E), die normal zur druckbeaufschlagbaren Fläche (22, 22') der Membran (20, 20') durch den Stegfuß (34, 34') und senkrecht zum Stegquerschnitt verläuft, unsymmetrisch ausgebildet ist, so dass der oder jeder Steg (32, 32') bei vorbestimmter Druckbeaufschlagung der Membran (20, 20') unter Anlage des Stegendes (36, 36') am Wandabschnitt (28) in vorbestimmter Richtung unbehindert knickt.

2. Vorrichtung (10) nach Anspruch 1, **dadurch gekennzeichnet, dass** das Verhältnis einer mittleren Breite des Stegs (32, 32') zu einer Höhe des Stegs (32, 32') größer gleich 1/3 und kleiner gleich 1 ist.

3. Vorrichtung (10) nach Anspruch 1 oder 2, **dadurch gekennzeichnet, dass** der Stegquerschnitt im Wesentlichen die Form eines Trapezes, insbesondere eines rechtwinkligen Trapezes aufweist, wobei der Stegfuß (34) die Basis des Trapezes bildet.

4. Vorrichtung (10) nach einem der vorhergehenden Ansprüche, **dadurch gekennzeichnet, dass** der Steg (32, 32') in einer Haupterstreckungsrichtung des Stegs (32, 32') ununterbrochen ausgebildet ist.

5. Vorrichtung (10) nach einem der vorhergehenden Ansprüche, **dadurch gekennzeichnet, dass** der Steg (32, 32') durch zwei um die Breite des Stegs (32, 32') voneinander beabstandete, von der vom Druckraum (14) abgewandten Fläche (24, 24') der Membran (20, 20') ausgehende Nuten (120, 120') des Stegabschnitts (30, 30') ausgebildet ist, wobei sich der Steg (32, 32') mit seinem Stegende (36, 36') im unverformten Zustand der Membran (20, 20') maximal bis auf Höhe der vom Druckraum (14) abgewandten Fläche (24, 24') erstreckt.

6. Vorrichtung (10) nach einem der vorhergehenden Ansprüche, **dadurch gekennzeichnet, dass** der Stegabschnitt (30, 30') eine Mehrzahl von Stegen (32, 32') aufweist, die gleichgerichtet unsymmetrisch ausgebildet sind.

7. Vorrichtung (10) nach einem der vorhergehenden Ansprüche, **dadurch gekennzeichnet, dass** die Profilierung (26, 26') der Membran (20, 20') eine Mehrzahl von Stegabschnitten (30, 30') aufweist.

8. Vorrichtung (10) nach wenigstens den Ansprüchen 5 und 7, **dadurch gekennzeichnet, dass** die Nuten (120, 120') von wenigstens zwei Stegabschnitten (30, 30') von Stegabschnitt (30, 30') zu Stegabschnitt (30, 30') verschieden tief ausgebildet sind.

9. Vorrichtung (10) nach einem der vorhergehenden Ansprüche, **dadurch gekennzeichnet, dass** die Membran (20, 20') im Wesentlichen rohrförmig ist.

10. Vorrichtung (10) nach Anspruch 9, **dadurch gekennzeichnet, dass** der Steg (32, 32') am Außenumfang der im Wesentlichen rohrförmigen Membran (20, 20') umlaufend oder in Längsrichtung der rohrförmigen Membran (20, 20') verlaufend ausgebildet ist.

11. Vorrichtung (10) nach einem der vorhergehenden Ansprüche, **dadurch gekennzeichnet, dass** die Membran (20, 20') aus einem Elastomer auf Basis Ethylen-Propylen-Dien-Kautschuk (EPDM) besteht.

12. Vorrichtung (10) nach einem der vorhergehenden Ansprüche, **dadurch gekennzeichnet, dass** das Gehäuse (12) einen ersten und einen zweiten Anschluss (16, 18) aufweist, zwischen denen sich der Druckraum (14) befindet und über welche die Vorrichtung (10) in Reihe in das hydraulische Betätigungssystem schaltbar ist, so dass ein Fluidstrom zwischen den Anschlüssen (16, 18) durch den Druckraum (14) hindurchzulaufen vermag.

13. Vorrichtung (10) nach Anspruch 12, **dadurch gekennzeichnet, dass** der erste Anschluss (16), die den Druckraum (14) umgebende rohrförmige Membran (20, 20') und der zweite Anschluss (18) im Gehäuse (12) auf einer gemeinsamen Achse (A, A') hintereinander angeordnet sind, wobei jeder Anschluss (16, 18) über einen im Wesentlichen quer zur gemeinsamen Achse (A, A') verlaufenden, strömungsumlenkenden Verbindungsabschnitt (105, 106) mit dem Druckraum (14) fluidverbunden ist.

14. Vorrichtung (10) nach Anspruch 13, **dadurch gekennzeichnet, dass** zwischen dem Druckraum (14) und dem Verbindungsabschnitt (105, 106) auf der Seite des ersten Anschlusses (16) und/oder der Seite des zweiten Anschlusses (18) eine Drosselbohrung (84, 102) vorgesehen ist, die sich entlang oder parallel zu der gemeinsamen Achse (A, A') erstreckt.

15. Vorrichtung (10) nach Anspruch 13 oder 14, **dadurch gekennzeichnet, dass** es sich bei dem ersten Anschluss (16) um einen Geberanschluss handelt, während es sich bei dem zweiten Anschluss (18) um einen Nehmeranschluss handelt, wobei vom ersten Anschluss (16) aus in Richtung des Druckraums (18) gesehen vor dem Verbindungsabschnitt (105) eine weitere Drosselbohrung (110) vorgesehen ist, die sich entlang oder parallel zu der gemeinsamen Achse (A, A') erstreckt.

## Claims

1. Device (10) for reducing vibrations in a hydraulic actuating system, particularly a hydraulic clutch actuating system for motor vehicles, comprising a housing (12) in which a pressure chamber (14) is formed, the pressure chamber being fluid-connectible by way of at least one connection (16, 18) with the hydraulic actuating system and being bounded by a resilient membrane (20, 20') which has a pressure-loadable surface (22, 22') facing the pressure chamber (14) and a surface (24, 24') remote from the pressure chamber (14), wherein the latter is provided with a profiling (26, 26') by way of which the membrane (20, 20') when loaded with pressure is capable of support on a fixed wall section (28) of the housing (12) and which has at least one web section (30, 30') with at least one web (32, 32') having a web foot (34, 34') distant from the wall section (28), a web end (36, 36') adjacent to the wall section (28) and a defined web cross-section, **characterized in that** the or each web (32, 32') is formed asymmetrically with respect to a notional plane (E) extending normal to the pressure-loadable surface (22, 22') of the membrane (20, 20') through the web foot (34, 34') and perpendicularly to the web cross-section so that the or each web (32, 32') when the membrane (20, 20') is subjected to predetermined pressure loading buckles in a predetermined direction without hindrance and with support of the web end (36, 36') on the wall section (28).

2. Device (10) according to claim 1, **characterized in that** the ratio of a mean width of the web (32, 32') to a height of the web (32, 32') is equal to or greater than 1/3 and equal to or smaller than 1.

3. Device (10) according to claim 1 or 2, **characterized in that** the web cross-section has substantially the shape of a trapezium, particularly a right-angled trapezium, wherein the web foot (34) forms the base of the trapezium.

4. Device (10) according to any one of the preceding claims, **characterized in that** the web (32, 32') is formed to be uninterrupted in a predominant direction of the web (32, 32').

5. Device (10) according to any one of the preceding claims, **characterized in that** the web (32, 32') is formed by two grooves (120, 120') of the web section (30, 30'), which are spaced apart by the width of the web (32, 32') and which emanate from the surface (24, 24') of the membrane (20, 20') remote from the pressure chamber (14), wherein the web (32, 32') extends by its web end (36, 36') in undeformed state of the membrane (20, 20') at most up to the height of the surface (24, 24') remote from the pressure chamber (14).

6. Device (10) according to any one of the preceding claims, **characterized in that** the web section (30, 30') has a plurality of webs (32, 32') formed asymmetrically with the same direction.

7. Device (10) according to any one of the preceding claims, **characterized in that** the profiling (26, 26') of the membrane (20, 20') has a plurality of web sections (30, 30').

8. Device (10) according to at least claims 5 and 7, **characterized in that** the grooves (120, 120') of at least two web sections (30, 30') are formed to be of different depth from web section (30, 30') to web section (30, 30').

9. Device (10) according to any one of the preceding claims, **characterized in that** the membrane (20, 20') is substantially tubular.

10. Device (10) according to claim 9, **characterized in that** the web (32, 32') is formed at the outer circumference of the substantially tubular membrane (20, 20') to encircle or to extend in longitudinal direction of the tubular membrane (20, 20').

11. Device (10) according to any one of the preceding claims, **characterized in that** the membrane (20, 20') consists of an elastomer on the basis of an ethylene-propylene-diene rubber (EPDM).

12. Device (10) according to any one of the preceding claims, **characterized in that** the housing (12) has a first connection (16) and a second connection (18), between which the pressure chamber (14) is disposed and by way of which the device (10) is serially connectible into the hydraulic actuating system so that a fluid flow is capable of passing between the connections (16, 18) through the pressure chamber (14).

13. Device (10) according to claim 12, **characterized in that** the first connection (16), the tubular membrane (20, 20') surrounding the pressure chamber (14) and the second connection (18) are arranged in the housing (12) in succession on a common axis (A, A'), wherein each connection (16, 18) is in fluid connection with the pressure chamber (14) by way of a flow-deflecting connecting section (105, 106) extending substantially transversely to the common axis (A, A').

14. Device (10) according to claim 13, **characterized in that** a throttle bore (84, 102) extending along or parallel to the common axis (A, A') is provided between the pressure chamber (14) and the connecting section (105, 106) on the side of the first connection (16) and/or the side of the second connection (18) .

15. Device (10) according to claim 13 or 14, **characterized in that** the first connection (16) is a master connection, whereas the second connection (18) is a slave connection, wherein a further throttle bore (110) extending along or parallel to the common axis (A, A') is provided in front of the connection section (105) as seen from the first connection (16) in the direction of the pressure chamber (14).

## Revendications

1. Dispositif (10) de réduction de vibrations dans un système d'actionnement hydraulique, en particulier dans un actionnement d'embrayage hydraulique pour des véhicules automobiles, avec un carter (12) dans lequel est conçu une chambre de pression (14) qui peut être reliée par communication fluidique au système d'actionnement hydraulique via au moins un raccordement (16, 18) et est délimitée par une membrane (20, 20') élastique à la façon d'une gomme, laquelle membrane présente une surface (22, 22') pouvant être sollicitée par pression et orientée vers la chambre de pression (14) et une surface (24, 24') tournant le dos à la chambre de pression (14), dans lequel cette dernière surface est dotée d'un profilage (26, 26') par-dessus lequel la membrane (20, 20') est à même de s'appuyer contre une section de paroi (28) fixe du carter (12) lors d'une sollicitation par pression et qui présente au moins une section de traverse (30, 30') avec au moins une traverse (32, 32') qui possède un pied de traverse (34, 34') éloigné de la section de paroi (28), une extrémité de traverse (36, 36') proche de la section de paroi (28) et une coupe transversale de traverse définie, **caractérisé en ce que** la ou chaque traverse (32, 32') est conçue de façon asymétrique par rapport à un plan imaginaire (E) qui se déroule perpendiculairement à la surface (22, 22') pouvant être sollicitée par pression de la membrane (20, 20') à travers le pied de traverse (34, 34') et verticalement à la coupe transversale de traverse, de sorte que la ou chaque traverse (32, 32') se plie sans entraves sous une sollicitation par pression prédéterminée de la membrane (20, 20') lors de l'installation de l'extrémité de traverse (36, 36') contre la section de paroi (28).

2. Dispositif (10) selon la revendication 1, **caractérisé en ce que** le rapport d'une largeur moyenne de la traverse (32, 32') à une hauteur de la traverse (32, 32') est supérieur ou égal à 1/3 et inférieur ou égal à 1.

3. Dispositif (10) selon la revendication 1 ou 2, **caractérisé en ce que** la coupe transversale de traverse présente essentiellement la forme d'un trapèze, en particulier d'un trapèze à angle droit, dans lequel le pied de traverse (34) forme la base du trapèze.

4. Dispositif (10) selon l'une des revendications précédentes, **caractérisé en ce que** la traverse (32, 32') est conçue de façon ininterrompue dans une direction d'extension principale de la traverse (32, 32').

5. Dispositif (10) selon l'une des revendications précédentes, **caractérisé en ce que** la traverse (32, 32') est constituée par deux rainures (120, 120') de la section de traverse (30, 30') partant de la surface (24, 24') tournant le dos à la chambre de pression (14) de la membrane (20, 20') et espacées l'une de l'autre autour de la largeur de la traverse (32, 32'), dans lequel dans un état non déformé de la membrane (20, 20') la traverse (32, 32') s'étend avec son extrémité de traverse (36, 36') au maximum jusqu'à hauteur de la surface (24, 24') tournant le dos à la chambre de pression (14).

6. Dispositif (10) selon l'une des revendications précédentes, **caractérisé en ce que** la section de traverse (30, 30') présente une pluralité de traverses (32, 32') qui dans le même sens sont conçues de façon asymétrique.

7. Dispositif (10) selon l'une des revendications précédentes, **caractérisé en ce que** le profilage (26, 26') de la membrane (20, 20') présente une pluralité de sections de traverse (30, 30').

8. Dispositif (10) selon au moins les revendications 5 et 7, **caractérisé en ce que** les rainures (120, 120') d'au moins deux sections de traverse (30, 30') sont conçues avec des profondeurs différentes d'une section de traverse (30, 30') à l'autre section de traverse (30, 30').

9. Dispositif (10) selon l'une des revendications précédentes, **caractérisé en ce que** la membrane (20, 20') est essentiellement de forme tubulaire.

10. Dispositif (10) selon la revendication 9, **caractérisé en ce que** la traverse (32, 32') est conçue circonférentiellement sur la périphérie extérieure de la membrane (20, 20') essentiellement de forme tubulaire, ou se déroulant dans la direction longitudinale de la membrane (20, 20') de forme tubulaire.

11. Dispositif (10) selon l'une des revendications précédentes, **caractérisé en ce que** la membrane (20, 20') est réalisée dans un élastomère sur une base éthylène-propylène-diène caoutchouc (EPDM).

12. Dispositif (10) selon l'une des revendications précédentes, **caractérisé en ce que** le carter (12) présente un premier et un second raccordement (16, 18) entre lesquels se trouve la chambre de pression (14) et via laquelle le dispositif (10) peut être monté en série dans le système d'actionnement hydraulique de sorte qu'un écoulement de fluide soit à même de passer à travers la chambre de pression (14) entre les raccordements (16, 18).

13. Dispositif (10) selon la revendication 12, **caractérisé en ce que** le premier raccordement (16), la membrane (20, 20') de forme tubulaire entourant la chambre de pression (14) et le second raccordement (18) sont agencés les uns derrière les autres dans le carter (12) sur un axe commun (A, A'), dans lequel chaque raccordement (16, 18) est relié à la chambre de pression (14) par communication fluidique via une section de liaison (105, 106) déviant l'écoulement et se déroulant essentiellement transversalement à l'axe commun (A, A').

14. Dispositif (10) selon la revendication 13, **caractérisé en ce qu'**entre la chambre de pression (14) et la section de liaison (105, 106) sur le côté du premier raccordement (16) et/ou sur le côté du second raccordement (18) est prévu un alésage d'étranglement (84, 102) qui s'étend le long ou en parallèle de l'axe commun (A, A').

15. Dispositif (10) selon la revendication 13 ou 14, **caractérisé en ce que** le premier raccordement (16) est un raccordement donneur tandis que le second raccordement (18) est un raccordement preneur, dans lequel vu depuis le premier raccordement (16) dans la direction de la chambre de pression (14) est prévu avant la section de liaison (105) un autre alésage d'étranglement (110) qui s'étend le long ou en parallèle de l'axe commun (A, A').
